# EUROPEAN PATENT APPLICATION

(11) **EP 3 187 418 A1**
(43) Date of publication of application: **05.07.2017**
(21) Application number: 15382677.1
(22) Date of filing: 30.12.2015
(51) Int. Cl.: B64D 13/06

(54) **AIR CONDITIONING SYSTEM**

(71) Applicant: Airbus Operations S.L., 28906 Getafe (ES)
(72) Inventor: CASADO MONTERO, Carlos, E-28906 Getafe, Madrid (ES)
(74) Representative: ABG Patentes, S.L.

(57) **Abstract**

The invention provides an air conditioning system (1) for a cabin (6) of an aircraft. The air conditioning system (1) comprises a work air source (2) suitable for providing work air, a distribution and control system (3), a main heat exchanger (4), a turbine (5) and a compressor (7). The inlet (51) of the turbine (5) is in fluid communication with an outlet (61) of the cabin (6) and the outlet (52) of the turbine (5) is in fluid communication with ambient. The inlet (71) of the compressor is suitable for being fed by the work air, and the outlet (72) of the compressor is in fluid communication with the inlet (41) hot side of the main heat exchanger (4), the compressor (7) being moved by the outlet shaft (53) of the turbine (5). The outlet (42) of the hot side of the main heat exchanger (4) is in fluid communication with the inlet (31) of the distribution and control system (3), the outlet (32) of which is in turn in fluid communication with an inlet of the cabin (6).

## Description

### TECHNICAL FIELD OF THE INVENTION

The present invention is related to the field of aircrafts, in particular to the field of air conditioning systems comprised in aircrafts.

### BACKGROUND OF THE INVENTION

Air conditioning systems are installed in aircrafts for the sake of passengers comfort. Compressed air is obtained from a pressurized air source, usually from an engine or an Auxiliary Power Unit (APU). That compressed air is treated usually following an inverse Brighton cycle in an air conditioning system.

Usually the air taken from the engines, or the APU, when the aircraft is in flight and at high altitude remains constant at a pressure given. The ambient pressure decreases with the altitude, what means that the pressure step is well higher.

On the other side the cabin is supplied with fresh air that remains at higher pressure than the ambient, in approximately the same amount of the air that enters. Air from the cabin is evacuated through different outlets, through outflow valves, to the ambient with no major benefit got from it.

These two systems or functions are usually decoupled one to each other.

Air which is extracted from the pressurized air source is not used to produce energy, so it is worthy to minimize the energy wasted in the different systems of the plane.

### SUMMARY OF THE INVENTION

The present invention gets power from the air discharged to the ambient and invest it into the work air coming from the air power source (engine, APU or a driven compressor) reducing the power that must be provided and therefore reducing the fuel consumption.

Thus, the present invention provides an air conditioning system according to claim 1 and an aircraft according to claim 13 as an alternative solution to the aforementioned problems. All the features described in this specification, including the claims, description and drawings, can be combined in any way, except for the cases of mutually exclusive features. The dependent claims define preferred embodiments of the invention.

According to a first aspect, the invention provides an air conditioning system for a cabin of an aircraft, the air conditioning system comprising:
a work air source suitable for providing work air;
a distribution and control system, with an inlet and an outlet;
a main heat exchanger with a hot side comprising an inlet and an outlet;
a turbine with an inlet and an outlet, the inlet of the turbine being in fluid communication with an outlet of the cabin and the outlet of the turbine being in fluid communication with ambient; the turbine further comprising an outlet shaft suitable for outputting energy generated by air passing through the turbine;
a compressor with an inlet and an outlet, the inlet of the compressor suitable for being fed by the work air, and the outlet of the compressor being in fluid communication with the inlet hot side of the main heat exchanger, the compressor being moved by the outlet shaft of the turbine;
the outlet of the hot side of the main heat exchanger being in fluid communication with the inlet of the distribution and control system, the outlet of which is in turn in fluid communication with an inlet of the cabin.

This air conditioning system needs pressurized air to be at a lower pressure as usual, since the remainder pressure is provided by the turbo-compressor system coupled to the system. As a consequence, energy is saved from the system, and fuel consumption is reduced.

In a particular embodiment, the air conditioning system further comprises a supplementary heat exchanger by means of which heat is transferred between the outlet of the compressor and the inlet of the turbine.

This supplementary heat exchanger improves the efficiency of the turbo-compressor system.

In a particular embodiment, the air conditioning system further comprises
an ambient sensor pressure and a cabin sensor pressure, suitable for providing a pressure value, which is the difference between ambient pressure and cabin pressure;
a first valve suitable for controlling the flow through the inlet of the compressor depending on the pressure value.

This valve allows the system to operate in an optimised way, as the system works better when cabin pressure is greater than the ambient pressure.

In a particular embodiment, the air conditioning system further comprises an air cycling machine, which contains the heat exchanger and further comprises at least a turbine, a compressor and a secondary heat exchanger.

In a particular embodiment, the air conditioning system further comprises a one way valve between the outlet of the compressor and the inlet of the hot side of the main heat exchanger.

In a particular embodiment, the air conditioning system further comprises
a one way valve between the outlet of the cabin and the inlet of the turbine; and
a second valve in the outlet of the cabin.

In a particular embodiment, the air conditioning system further comprises a one way valve in the outlet of the turbine.

In a particular embodiment, the pressurized air source is one of a bleed air duct of an engine or an APU.

In a particular embodiment, the pressurized air source is a ram air duct. In a particular embodiment, the pressurized air source is a ram air duct and a compressor.

In a particular embodiment, the air conditioning system further comprises a first electric motor suitable for driving the compressor.

In a particular embodiment, the air conditioning system further comprises a second compressor with an inlet and an outlet, the inlet being in fluid connection with ambient and the outlet being in fluid connection with the inlet of the hot side of the main heat exchanger.

In a particular embodiment, the air conditioning system further comprises a second electric motor suitable for driving the second compressor.

In a second inventive aspect, the invention provides an aircraft comprising an air conditioning system according to any embodiment of the first inventive aspect.

### DESCRIPTION OF THE DRAWINGS

These and other characteristics and advantages of the invention will be clearly understood in view of the detailed description of the invention and further in view of the preferred embodiments of the invention, with reference to the drawings. Preferred embodiments are given just as examples and are not intended to limit the scope of the present invention.
- Figure 1: This figure shows a scheme of a first embodiment of an air conditioning system according to the invention.
- Figure 2: This figure shows a scheme of a second embodiment of an air conditioning system according to the invention.

### DETAILED DESCRIPTION OF THE INVENTION

Having outlined the object of the invention, specific non-limitative embodiments are described hereinafter.

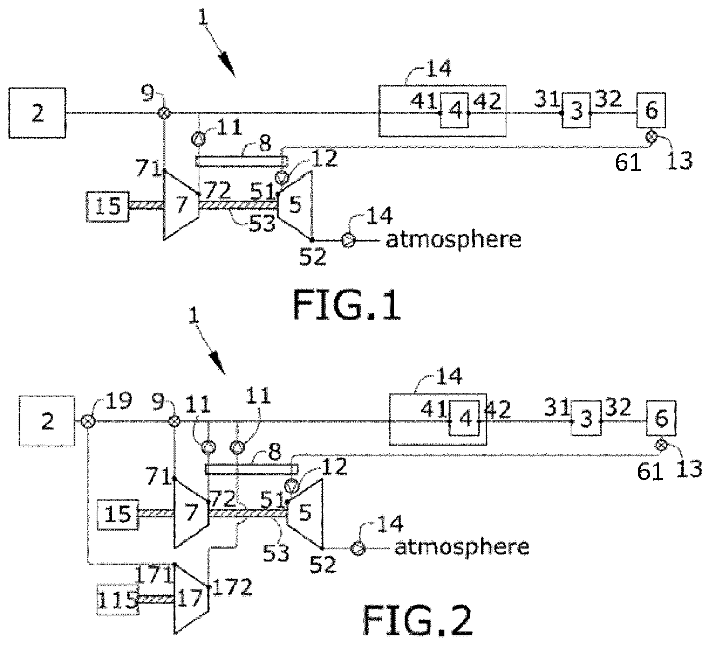

Figure 1 shows a particular embodiment of air conditioning system (1) according to the invention, this air conditioning system (1) being suitable for a cabin (6). In this figure, the air conditioning system (1) comprises:
a work air source (2) suitable for providing work air;
a distribution and control system (3), with an inlet (31) and an outlet (32)
a main heat exchanger, (4) with a hot side comprising an inlet (41) and an outlet (42);
a turbine (5);
a main compressor (7);

The outlet (42) of the hot side of the main heat exchanger (4) is in fluid communication with an inlet of the cabin (6).

In this embodiment, the pressurized air source (2) is one of a bleed air duct of an engine or an APU or ambient air. This work air is useful for feeding the hot side of the heat exchanger (4) and, once it has been cooled, then introduced into the cabin (6). But in this particular embodiment, this work air is made pass through the main compressor (7).

The turbine comprises an inlet (51) and an outlet (52), the inlet (51) of the turbine (5) being in fluid communication with an outlet (61) of the cabin (6) and the outlet (52) of the turbine (5) being in fluid communication with ambient. The turbine is then fed with - air exiting the cabin. This air exiting the cabin is useful for providing energy in the turbine. Once the air exiting the cabin has passed through the turbine, it is exhausted into the atmosphere.

The turbine (5) further comprises an outlet shaft (53) suitable for outputting energy generated by the dirty air passing through the turbine (5). This outlet shaft (53) is useful for moving the main compressor (7).

The main compressor (7) comprises an inlet (71) and an outlet (72), the inlet (71) of the main compressor (7) being fed by the work air, and the outlet (72) of the main compressor (7) being in fluid communication with the inlet (41) of the hot side of the main heat exchanger (4). The outlet (42) of the hot side of the main heat exchanger (4) is in fluid communication with the inlet (31) of the distribution and control system (3), the outlet (32) of which is in turn in fluid communication with an inlet of the cabin (6). As a consequence, the work air which has been provided by the pressurized air source (2) is introduced into the cabin (6), after passing through the compressor (7), the heat exchanger (4) and the control system (3). The compressor (7) increases the pressure of the work air, so it is not necessary to obtain it at a high pressure, thus saving energy and fuel consumption.

In this figure, a supplementary heat exchanger (8) is also shown. By means of this supplementary heat exchanger (8), heat is transferred from the outlet (72) of the compressor (7) to the inlet (51) of the turbine (5), thus increasing the performance of the turbine (5) and compressor (7) assembly.

This system also comprises an ambient sensor pressure and a cabin sensor pressure, suitable for providing a pressure value, which is the difference between ambient pressure and cabin pressure. A first valve (9), further comprised in this system, is suitable for controlling the flow through the inlet (71) of the compressor (7) depending on the pressure value, since this system works better when the pressure value is greater than 15 MPa.

In this embodiment, the heat exchanger (4) is comprised in an air cycling machine (14) which further comprises at least a turbine, a compressor and a secondary heat exchanger.

This air conditioning system (1) further comprises more valves:
a one way valve (11) between the outlet (72) of the compressor and the inlet (41) of the hot side of the main heat exchanger (4);
a one way valve (12) between the outlet (61) of the cabin and the inlet (51) of the turbine (5);
a second valve (13) in the outlet (61) of the cabin (6); and
a one way valve (14) in the outlet (52) of the turbine (5).

In this embodiment, a first electric motor (15) is included. The first electric motor (15) is suitable for driving the compressor (7), both when the turbine (5) is not working and when the turbine (5) is working but the air conditioning system (1) requires a higher pressure.

Figure 2 shows a different embodiment of an air conditioning system (1) according to the invention. In this figure, a second electric motor (115) is suitable for driving a second compressor (17). This second compressor (17) comprises an inlet (171) and an outlet (172), the inlet (171) being in fluid connection with ambient and the outlet (172) being in fluid connection with the inlet (41) of the hot side of the main heat exchanger (4). This second compressor (17) is driven by the second electric motor (115).

## Claims

1. Air conditioning system (1) for a cabin (6) of an aircraft, the air conditioning system (1) comprising:
a work air source (2) suitable for providing work air;
a distribution and control system (3), with an inlet (31) and an outlet (32)
a main heat exchanger (4) with a hot side comprising an inlet (41) and an outlet (42);
a turbine (5) with an inlet (51) and an outlet (52), the inlet (51) of the turbine (5) being in fluid communication with an outlet (61) of the cabin (6) and the outlet (52) of the turbine (5) being in fluid communication with ambient; the turbine (5) further comprising an outlet shaft (53) suitable for outputting energy generated by air passing through the turbine (5);
a compressor (7) with an inlet (71) and an outlet (72), the inlet (71) of the compressor suitable for being fed by the work air, and the outlet (72) of the compressor being in fluid communication with the inlet (41) hot side of the main heat exchanger (4), the compressor (7) being moved by the outlet shaft (53) of the turbine (5);
the outlet (42) of the hot side of the main heat exchanger (4) being in fluid communication with the inlet (31) of the distribution and control system (3), the outlet (32) of which is in turn in fluid communication with an inlet of the cabin (6).

2. Air conditioning system (1) according to claim 1, further comprising a supplementary heat exchanger (8) by means of which heat is transferred between the outlet (72) of the compressor (7) and the inlet (51) of the turbine (5).

3. Air conditioning system (1) according to any of the preceding claims, further comprising
an ambient sensor pressure and a cabin sensor pressure, suitable for providing a pressure value, which is the difference between ambient pressure and cabin pressure;
a first valve (9) suitable for controlling the flow through the inlet (71) of the compressor (7) depending on the pressure value.

4. Air conditioning system (1) according to any of the preceding claims, wherein the heat exchanger (4) is comprised in an air cycling machine (14) which further comprises at least a turbine, a compressor and a secondary heat exchanger.

5. Air conditioning system (1) according to any of the preceding claims, further comprising a one way valve (11) between the outlet (72) of the compressor and the inlet (41) of the hot side of the main heat exchanger (4).

6. Air conditioning system (1) according to any of the preceding claims, further comprising
a one way valve (12) between the outlet (61) of the cabin and the inlet (51) of the turbine (5); and
a second valve (13) in the outlet (61) of the cabin (6).

7. Air conditioning system (1) according to any of the preceding claims, further comprising a one way valve (14) in the outlet (52) of the turbine (5).

8. Air conditioning system (1) according to any of the preceding claims, wherein the pressurized air source (2) is one of a bleed air duct of an engine or an APU.

9. Air conditioning system (1) according to any of the claims 1 to 7, wherein the pressurized air source (2) is a ram air duct.

10. Air conditioning system (1) according to any of the preceding claims, further comprising a first electric motor (15) suitable for driving the compressor (7).

11. Air conditioning system (1) according to any of the preceding claims, further comprising a second compressor (17) with an inlet (171) and an outlet (172), the inlet (171) being in fluid connection with ambient and the outlet (172) being in fluid connection with the inlet (41) of the hot side of the main heat exchanger (4).

12. Air conditioning system (1) according to claim 11, further comprising a second electric motor (115) suitable for driving the second compressor (17).

13. Aircraft comprising an air conditioning system (1) according to any of the preceding claims.
